# EUROPÄISCHE PATENTANMELDUNG

(11) **EP 4 556 947 A1**
(43) Veröffentlichungstag der Anmeldung: **21.05.2025**
(21) Anmeldenummer: 23210024.8
(22) Anmeldetag: 15.11.2023
(51) Int. Cl.: G01S 7/481, G01S 7/497, G01S 17/08, G02B 6/28, G02B 6/42

(54) **VORRICHTUNG ZUM MESSEN EINER DISTANZ EINES OBJEKTES, VERFAHREN ZUR HERSTELLUNG EINER LICHTLEITFASER ZUR VERWENDUNG IN EINER DERARTIGEN VORRICHTUNG SOWIE VERFAHREN ZUM MESSEN EINER DISTANZ EINES OBJEKTES**

(71) Anmelder: Dimetix AG, 9100 Herisau (CH)
(72) Erfinder: Giger, Kurt, 9464 Rüthi (CH); Zünd, Andreas, 9042 Speicher (CH); Taeschler, Stefan, 9200 Gossau (CH)
(74) Vertreter: Hepp Wenger Ryffel AG

(57) **Zusammenfassung**

Es wird eine Vorrichtung (1) zum Messen einer Distanz eines Objektes, an dem von der Vorrichtung (1) modulierte und ausgesendete Laserstrahlen reflektiert werden, offenbart. Die Vorrichtung umfasst eine Lichtleitfaser (2) in die Laserstrahlung einkoppelbar ist und eine Hauptlinse (3), durch die die Laserstrahlung entlang einer optischen Achse (4) der Hauptlinse aussendbar ist. Die Lichtleitfaser (2) umfasst eine Auskoppelfläche (5), wobei auf der Auskoppelfläche (5) eine, insbesondere ringförmige, Reflektionsfläche (6) angeordnet ist.

## Beschreibung

Die Erfindung richtet sich auf eine Vorrichtung zum Messen einer Distanz eines Objektes, ein Verfahren zur Herstellung einer Lichtleitfaser zur Verwendung in einer derartigen Vorrichtung sowie ein Verfahren zum Messen einer Distanz eines Objektes.

Aus dem Stand der Technik sind optische Distanzmesser basierend auf Lasermessung bekannt. Solche Distanzmesser verwenden das Ti-me-of-flight(TOF)-Prinzip oder die Phasenmodulation als Messtechniken. Insbesondere bei einem Einsatz im industriellen Umfeld sind derartige Messegeräte Temperaturschwankungen, Vibrationen sowie anderen Herausforderungen ausgesetzt, die die Messgenauigkeit beeinflussen können. Zusätzlich ist üblicherweise eine optische Lichtausgangs- und eine optische Lichteingangsfläche vorgesehen, die sich nicht an einem Ort befinden, sodass die Messgeräte bei sehr kurzen Distanzen nicht funktionieren. Weiterhin ist eine Herausforderung, dass bei grossen Distanzen sehr kleine Abweichungen im Messgerät zu grossen Messfehlern führen.

Es ist daher die Aufgabe der Erfindung eine Vorrichtung zum Messen einer Distanz eines Objektes, ein Verfahren zur Herstellung einer Lichtleitfaser zur Verwendung in einer derartigen Vorrichtung sowie ein Verfahren zum Messen einer Distanz eines Objektes zu schaffen, welches die Nachteile des Standes der Technik vermeidet. Insbesondere ist eine Vorrichtung zum Messen einer Distanz mit zugehörigen Verfahren zu schaffen, welches bei herausfordernden Bedingungen genau messen kann.

Die Aufgabe wird durch eine Vorrichtung zum Messen einer Distanz, ein Verfahren zur Herstellung einer Lichtleitfaser zur Verwendung in einer derartigen Vorrichtung sowie ein Verfahren zum Messen einer Distanz gemäss den unabhängigen Ansprüchen gelöst.

Insbesondere wird die Aufgabe durch eine Vorrichtung zum Messen einer Distanz eines Objektes gelöst, an dem von der Vorrichtung modulierte und ausgesendete Laserstrahlung reflektiert werden. Die Vorrichtung umfasst eine Lichtleitfaser in die Laserstrahlung einkoppelbar ist und eine Hauptlinse, durch die die Laserstrahlung entlang einer optischen Achse aussendbar ist. Die Lichtleitfaser umfasst eine Auskoppelfläche, wobei auf der Auskoppelfläche eine, insbesondere ringförmige, Reflektionsfläche angeordnet ist.

Eine derartige Vorrichtung ermöglicht das Aussenden und Wiederempfangen der Laserstrahlung, die zur Messung verwendet wird, auf derselben Fläche der Lichtleitfaser, sodass auch in kurzen Entfernungen gemessen werden kann. Die Kalibration ist optimal, da Referenzkanal und Messkanal fast identisch sind. Sende- und Empfangskanal werden gleichzeitig fokussiert, so dass keine Justierung von Sendeachse zu Empfangsachse notwendig ist. Die Justierung ist weiterhin temperaturstabil, da für Sende- und Empfangskanal die Temperatureinflüsse gleich sind. Die Reflektionsfläche kann beispielsweise eine Goldbeschichtung sein.

Bei einer ringförmigen Reflektionsfläche kann die Laserstrahlung durch die Mitte der Lichtleitfaser ausgesendet werden und nach Reflektion an dem zum messenden Objekt wieder zurück durch die Linse auf die Reflektionsfläche treffen.

Die Auskoppelfläche kann in einem nicht-rechten Winkel zur optischen Achse der Lichtleitfaser angeordnet sein. Der Winkel kann im Bereich vom 25° zu 65° zur optischen Achse der Hauptlinse liegen, insbesondere im Bereich 35° bis 55°, weiter insbesondere im Wesentlichen 52°. Bevorzugt ergibt die Summe der Winkel von optischer Achse der Lichtleitfaser zu optischer Achse der Hauptlinse und der Winkel der Auskoppelfläche zur optischen Achse der Lichtleitfaser im Wesentlichen 45°.

Somit kann das zurück reflektierte Laserlicht von der Reflektionsfläche der Auskoppelfläche auf einen Empfänger geleitet werden, der nicht im Bereich der Hauptlinse der Vorrichtung angeordnet sein muss, sondern je nach Winkelung der Auskoppelfläche an einem anderen Ort innerhalb der Vorrichtung.

Somit lässt sich die Vorrichtung leichter und kompakter herstellen.

Von der Reflektionsfläche kann Laserstrahlung auf einen Empfänger leitbar sein, wobei der Empfänger insbesondere eine Avalanche-Fotodiode ist und bevorzugt in einem Entfernungsbereich von 0,01 mm bis 2 mm, bevorzugt 0,05 mm bis 0,3 mm oder 0,4 mm bis 1 mm, insbesondere 0,3 mm bis 0,6 mm, von der Reflektionsfläche angeordnet ist.

Durch eine solche derartige nahe Anordnung des Empfängers an der Reflektionsfläche wird sichergestellt, dass ausreichend reflektiertes Laserlicht empfangen wird und durch die Elektronik verarbeitet werden kann.

Der Empfänger kann eine Halbkugellinse oder eine Kugellinse umfassen.

Die Lichtleitfaser kann eine Single mode-Lichtleitfaser sein und insbesondere eine polarisationserhaltende Faser sein.

Die Verwendung einer Single mode-Faser führt zu einer geringen Signaldämpfung, kaum Laufzeitverschiebungen und der Möglichkeit der Nutzung von hohen Bandbreiten. Weiterhin weist eine Single mode-Faser einen geringeren Durchmesser des Lichtaustrittes auf. Mit der Single Mode Faser können optimal kleine Laserpunkte an der Zieloberfläche generiert werden. Mit der polarisationserhaltenden Faser kann der Auskoppelungsreflex minimiert oder bewusst gesteuert werden.

An einer Einkoppelfläche der Lichtleitfaser kann eine Einkoppelvorrichtung für die Lasereinkopplung ausgebildet sein. Somit kann das Laserlicht optimal in die Lichtleitfaser eingekoppelt werden.

Eine Einkoppelvorrichtung kann Kugellinsen und/oder Zylinderlinsen umfassen. Die Einkoppelvorrichtung kann auch eine konische Lichtleitfaser sein.

Die Vorrichtung kann eine Laserquelle, insbesondere eine Laserdiode, umfassen, deren Licht in die Lichtleitfaser einkoppelbar ist und durch das bevorzugte Licht mit einer Wellenlänge in einem Bereich von im Wesentlichen 490 nm bis 950 nm erzeugbar ist. Insbesondere ist Licht mit 490-575 nm, und/oder 630-680 nm und/oder 780-950 nm erzeugbar.

Mit einer derartigen Laserquelle kann das Laserlicht, welches zur Messung notwendig ist, optimal erzeugt und durch die Lichtleitfaser weitergleitet werden.

Alternativ kann anstatt der Laserdiode auch ein Faserlaser verwendet werden. Ein Faserlaser eignet sich insbesondere für kurze Pulse < 100ps und hochgenaue Messungen, da keine Wellenlängensprünge innerhalb des Pulses entstehen. Der Faserlaser kann dann die Lichtleitfaser ersetzen und die erfindungsgemässe Auskoppelfläche umfassen. Optional kann an den Faserlaser eine Lichtleitfaser durch splicen angebunden werden, auf die ein Reflektor aufgebracht wurde, analog zur Lichtleitfaserauskoppelfläche wie vorhergehend beschrieben.

Die Hauptlinse kann auf der zur Lichtleitfaser weisenden Seite zumindest teilweise mit Dispersionsspritzern bedeckt sein, sodass diffuses Licht reflektierbar ist. Insbesondere können Dispersionsspritzer mit einem Tintenstrahldrucker aufgedruckt sein. Als Farbe für die Dispersionsspritzer kann beispielsweise UVhärtbare Farbe, insbesondere weisse Farbe, verwendbar sein. Somit lassen sich die Dispersionsspritzer reproduzierbar aufbringen und sind leicht aushärtbar.

Somit ist ein diffuses Kalibrier-Signal von der Linse zu erhalten. Insbesondere sind 1% bis 20% der Linsenoberfläche mit Diffusionsspritzern bedeckt.

Alternativ kann eine diffus reflektierende Folie oder eine Teilverspiegelung im Sendebereich, also der zur Lichtleitfaser weisenden Seite der Hauptlinse, angeordnet sein
Durch die Verwendung eines diffusen Kalibriersignals, welches mit dem ebenfalls diffusen Messignal verglichen wird. Hierdurch wird die Genauigkeit erhöht.

Das Kalibriersignal ist nötig, um die Verzögerungszeiten der Messelektronik und auch die Veränderungen der Verzögerung zu eliminieren und so zu einem genauen Messergebnis, insbesondere in einem Genauigkeitsbereich von 0.1mm Bereich zu kommen. Hierfür sollten Mess- und Kalibriersignal möglichst identisch sein.

Die Hauptlinse kann eine sphärische Linse sein, insbesondere eine achromatische Dupletlinse. Durch eine sphärische Linse wird der Sender fokussiert und das Empfangssignal wird ausserhalb des Sendebereichs durch die Doubletlinse defokussiert.

Mit der Dupletlinse lassen sich zusätzlich chromatische und sphärische Aberrationen eliminieren. Auch dies trägt zur Optimierung der Genauigkeit bei.

Die Hauptlinse kann eine asphärische Linse sein, insbesondere eine asphärische Kunststofflinse.

Bei einer Asphäre können unterschiedliche Brennweiten ausgebildet sein, sodass die Linse in der Mitte und im Ring ausserhalb der Mitte unterschiedliche Brennweiten aufweisen. Dies kann auch durch eine Hybridlinse erreicht werden. Alternativ kann eine Folie mit Loch in der Mitte oder ein Dünnglas aufgeklebt werden. Ein Dünnglas kann auch vor der Linse angeordnet werden. Die asphärische Linse kann weiterhin unterschiedliche Radien im Sendestrahlungsbereich und im Empfangsstrahlungsbereich aufweisen. Eine Kunststofflinse ist kostengünstig herzustellen, weist jedoch eine Defokussierung im Temperaturbereich auf. Denkbar ist auch eine Kombination von sphärischer Glaslinse und asphärischer Kunststofflinse. Die kombiniert die Genauigkeit der Glaslinse mit den günstigen Herstellkosten der Kunststofflinse. Zusätzlich ist mit einer Kunststofflinse eine aktive Fokussierung im Temperaturbereich möglich.

Die optische Achse der Hauptlinse kann relativ zu der optischen Achse der Lichtleitfaser weder koaxial noch parallel angeordnet sein, sondern insbesondere einen Winkel im Bereich von 1° bis 359°, insbesondere 1° bis 179°, bevorzugt +/- 10° bis 30° zueinander aufweisen.

Somit ist die Lichtleitfaser, insbesondere die optische Achse der Lichtleitfaser, in einem Winkel zur optischen Achse der Hauptlinse angeordnet, sodass in Kombination mit dem nicht rechten Winkel der Auskoppelfläche die Positionierung des Empfängers des Messlichts optimiert werden kann.

Sowohl der Empfänger als auch die Hauptlinse weisen eine Fassung auf, die jeweils einen grösseren Wärmeausdehnungskoeffizienten aufweisen als die die Fassung verbindende Halterung.

Die Fassung kann beispielsweise aus Aluminium oder Aluminiumlegierung bestehen oder auch Magnesium- oder Zinklegierungen. Die Halterung, die die Fassungen verbindet, kann beispielsweise ein Kohlefaserrohr sein oder auch Nickel-Stahl-Legierungen, Titan oder Chromstahl. Entscheidend ist hierbei der Unterschied im Wärmeausdehnungskoeffizienten zwischen den Materialien.

Die Vorrichtung umfasst weiterhin eine Signalverarbeitungsvorrichtung und eine Signalverarbeitungselektronik. Die Signalverarbeitungselektronik umfasst insbesondere eine einkanalige Empfängerkette mit Kalibrier- und Messignal seriell zeitversetzt. Die Signalverarbeitungselektronik muss eine hohe Bandbreite aufweisen, insbesondere für kurz Messdistanzen.

Die Signalverarbeitungsvorrichtung ermöglicht die Detektion von Mehrfachreflexionen.

Zur Lösung der Aufgabe führt weiterhin ein Verfahren zur Herstellung einer Lichtleitfaser zur Verwendung einer Vorrichtung wie vorhergehend beschrieben, wobei insbesondere ein Auskoppelfläche der Lichtleitfaser in einem nicht-rechten Winkel zur optischen Achse der Lichtleitfaser geschliffen wird, die Auskoppelfläche mit einer Reflektionsschicht beschichtet wird, die Reflektionsschicht von der Auskoppelfläche in einem Sendebereich um die Mitte der Lichtleitfaser durch Eindringen von UV-Licht in die Lichtleitfaser entfernt wird, sodass nur der mittlere Bereich der Reflektionsschicht wieder entfernt wird.

Somit lässt sich eine Auskoppelfläche der Lichtleitfaser ringförmig mit einer Reflektionsschicht beschichten, wobei die Mitte weiterhin für die Sendestrahlung durchlässig bleibt. Bevorzugt wird der UV-Laser durch Spleissen temporär in die Glasfaser eingekoppelt, sodass die aufgebrachte Reflektionsschicht mit dem UV-Laser entfernt werden kann. Die entfernte Schicht weist einen Durchmesser von im Wesentlichen ca. 5 µm auf. Alternativ zum Einspleissen kann auch ein Fiberconnector vorgesehen sein, über den der UV-Laser und der rote Messlaser auswechselbar sind.

Zur Lösung der Aufgabe führt weiterhin ein Verfahren zum Messen einer Distanz eines Objektes an dem von einer Vorrichtung wie vorhergehend beschrieben modulierte und ausgesendete Laserstrahlen reflektiert werden, wobei eine Laserquelle moduliertes Laserlicht als Sendestrahlung erzeugt, die Sendestrahlung in die Lichtleitfaser eingekoppelt wird, die Sendestrahlung durch den Sendebereich in der Auskoppelfläche aus der Lichtleitfaser ausgekoppelt wird, insbesondere ein kleiner Teil der Sendestrahlung von der Innenseite der Hauptlinse reflektiert wird, die Sendestrahlung durch die Hauptlinse verläuft, die Sendestrahlung an einem Objekt reflektiert wird, das reflektierte Laserlicht als Empfangsstrahlung durch die Hauptlinse verläuft, die Empfangsstrahlung an der Reflektionsschicht der Auskoppelfläche reflektiert und auf einen Empfänger geleitet wird.

Durch dieses Verfahren wird eine genaue und von Umwelteinflussfaktoren weitgehend unabhängige Distanzmessung ermöglicht.

Die Erfindung wird im Folgenden anhand von Figuren näher erläutert. Hierbei zeigt:
Fig. 1: Eine schematische Darstellung der Optik der Vorrichtung,
Fig. 2: eine schematische Darstellung der Optik der Vorrichtung mit Halterung,
Fig. 3: eine schematische Darstellung der Reflektionsfläche und der Verlauf des Empfangsstrahls,
Fig. 4: eine schematische Darstellung der Hautlinse mit Verlauf des Empfangsstrahls,
Fig. 5: eine schematische Darstellung der Vorrichtung,
Fig. 6: eine schematische Darstellung der Lichtleitfaser,
Fig. 7: eine schematische Darstellung der Auskoppelfläche.

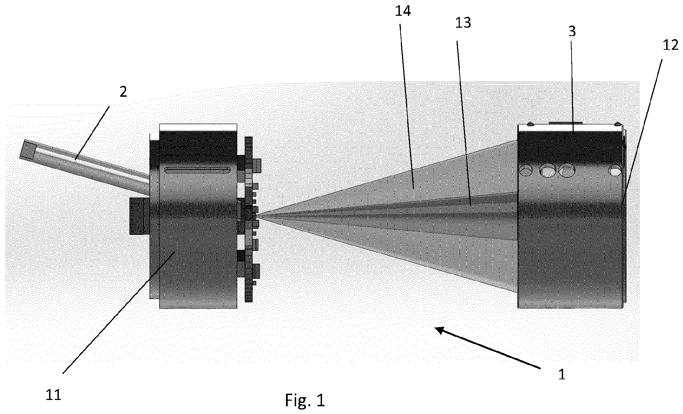

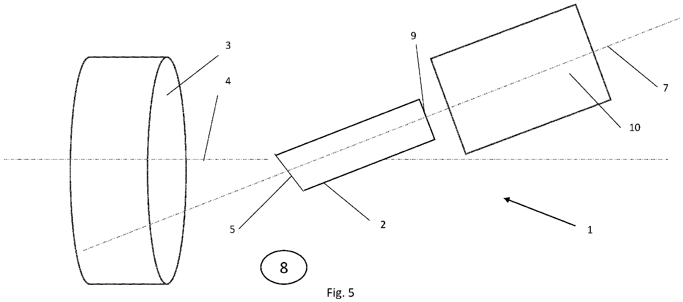

Figur 1 zeigt eine Darstellung der optischen Elemente der Vorrichtung 1. Die Vorrichtung 1 umfasst eine Lichtleitfaser 2 und eine Hauptlinse 3. Die optischen Achsen der Hauptlinse 3 und der Lichtleitfaser 2 sind nicht identisch oder koaxial. Sowohl die Hauptlinse 3 als auch die Lichtleitfaser 2 sind jeweils in Fassungen 11,12 gehalten, wobei die Fassung 11 der Lichtleitfaser 2 ebenfalls den Empfänger 8 umfasst. Aus der Lichtleitfaser 2 kommt Laserlicht mit einer Wellenlänge in einem Bereich von 490 nm bis 950 nm, welches als Sendestrahlung 13 durch die Hauptlinse 3 auf ein zu messendes Objekt gesendet wird. Das Objekt reflektiert die Strahlung zurück, wodurch sie durch die Hauptlinse 3 als Empfangsstrahlung 14 zurück auf den Empfänger 8 (s. Fig. 5) geleitet wird. Die Hauptlinse 3 ist auf der zur Lichtleitfaser 2 hinweisenden Seite mit kleinen weissen Farbpunkten als Dispersionsspritzer bedeckt, sodass ein kleiner Teil der Sendestrahlung 13 sofort wieder zurück reflektiert wird. Diese zurück reflektierte Strahlung wird als Kalibierstrahlung verwendet. Durch die Dispersionsspritzern wird die Kalibrierstrahlung diffus. Die diffuse Kalibrierstrahlung wird ebenfalls von dem Empfänger 8 (s. Fig. 5) detektiert und in einer Elektronik weiterverarbeitet.

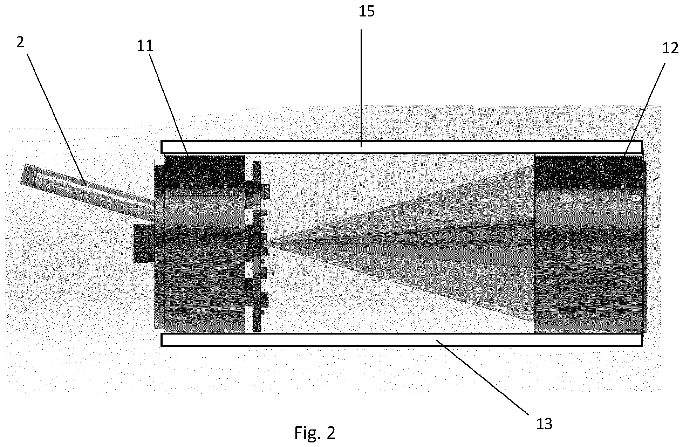

Figur 2 zeigt die Vorrichtung aus Figur 1 mit einer Halterung 15, die die Fassung 11 des Empfängers 8 und der Lichtleitfaser 2 und die Fassung 12 der Hauptlinse 3 verbindet. Der Wärmeausdehnungskoeffizient der Fassungen 11, 12 ist gleich und grösser als der Wärmeausdehnungskoeffizient der Halterung 15 der Fassungen 11, 12. In diesem Fall sind die Fassungen 11 und 12 aus einer Aluminiumlegierung hergestellt und die Halterung 15 aus Kohlefaser.

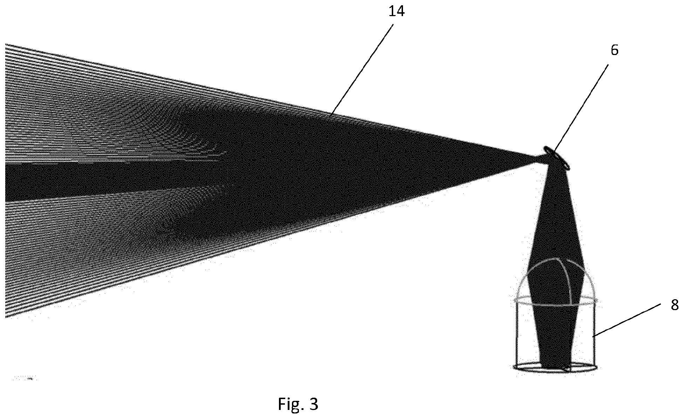

Figur 3 zeigt eine schematische Darstellung der Empfangsstrahlung 14, die von der Hauptlinse (nicht gezeigt) auf die Reflektionsfläche 6 trifft und von dort auf den Empfänger 8 geleitet wird. Der Empfänger 8 ist eine avalanche Fotodiode.

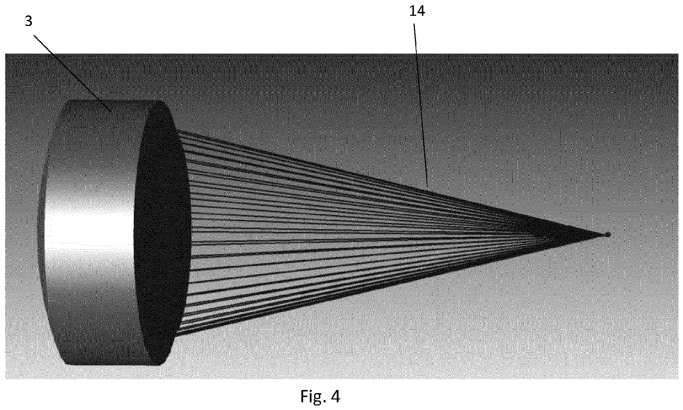

Figur 4 zeigt eine schematische Darstellung des Empfangsstrahles 14 auf der Hauptlinse 3.

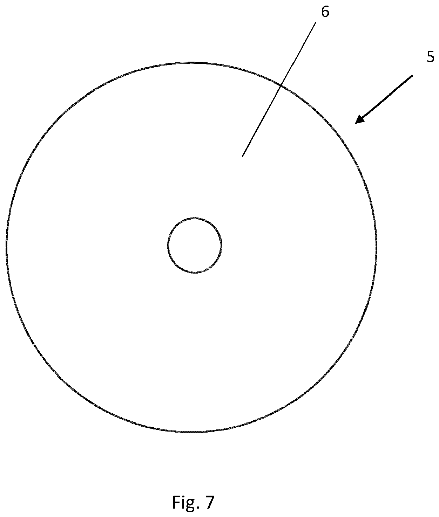

Figur 5 zeigt eine schematische Darstellung der Vorrichtung 1 mit der Lichtleitfaser 2 und der Hauptlinse 3. Die Lichtleitfaser 2 weist eine optische Achse 7 auf, die nicht identisch ist zur optischen Achse 4 der Hauptlinse 3. Der Winkel zwischen den optischen Achsen beträgt im Wesentlichen 20°, insbesondere ein Bereich von16° bis 20°. Die Lichtleitfaser 2 weist weiterhin eine Einkoppelfläche 9 für Laserlicht auf. Das Laserlicht wird durch die Laserquelle 10, eine Laserdiode, erzeugt. Die Lichtleitfaser 2 weist eine Auskoppelfläche 5 auf, die einen nicht rechten Winkel zur optischen Achse 7 der Lichtleitfaser und einen nicht rechten Winkel zur optischen Achse 4 der Hauptlinse 3 aufweist. Die Kombination der beiden Winkel ergibt im Wesentlichen eine 45° Winkelung der Auskoppelfläche zur optischen Achse 4 der Hauptlinse 3. Hierbei sind die Winkel zwischen optischer Achse 7 Lichtleitfaser 2 und optischer Achse 4 der Hauptlinse 16°, 29° Schleifwinkel der Lichtleitfaser, also Winkel zwischen optischer Achse 7 der Lichtleitfaser und Auskoppelfläche 5 und 45° zwischen Reflektionsfläche 6 und optischer Achse der Hauptlinse 3. Alternativ, wäre ein Winkel zwischen Reflektionsfläche 6 und optischer Achse der Hauptlinse 3 50°, mit einem Winkel von 18,3° zwischen optischer Achse der Lichtleitfaser 2 und optische Achse der Hauptlinse 3 und einem Winkel von 31.7° Schleifwinkel der Lichtleitfaser 2 denkbar. Weiter alternativ wäre ein Winkel zwischen Reflektionsfläche 6 und optischer Achse der Hauptlinse 3 52°, mit einem Winkel von 19,2° zwischen optischer Achse 7 der Lichtleitfaser 2 und optische Achse 4 der Hauptlinse 3 und einem Winkel von 32,8° Schleifwinkel der Lichtleitfaser 2 denkbar. Bei diesem Winkeln sind keinerlei Bauteile des Empfängers 8 im Lichtkegel der Empfangs- oder Sendestrahlung 14,13. Die Auskoppelfläche 5 ist weiterhin ringförmig mit einer Reflektionsfläche 6 beschichtet. Somit kann die von der Laserdiode 10 erzeugte Strahlung durch die Lichtleitfaser 2 und in der Mitte durch die Auskoppelfläche 5 auf die Hauptlinse 3 geleitet werden. Diese Sendestrahlung 13 (s. Fig. 1), die durch die Hauptlinse 3 gesendet wird, wird dann an einem Objekt reflektiert und kommt zurück als Empfangsstrahlung 14 (s. Fig. 1) durch Hauptlinse 3 auf die Auskoppelfläche 5. Die Reflektionsfläche 6 (s. Fig. 7) der Auskoppelfläche 5 reflektiert das an einem Objekt reflektierte Licht auf den Empfänger 8. Zusätzlich weist die Hauptlinse 3 auf ihrer zur Lichtleitfaser 2 hinweisenden Seite kleine weisse diffus reflektierende Farbpunkte als Dispersionsspritzer auf, die die Sendestrahlung 13 aus der Lichtleitfaser 2 sofort reflektieren und somit ein diffuses Reflektionslicht als Kalibriersignal zurücksenden. Die Dispersionsspritzer reflektieren 5% bis 15% von der ausgesendeten Laserleistung. An dem Empfänger 8 sind eine Signalverarbeitungsvorrichtung und eine Signalverarbeitungselektronik angeschlossen. Durch diese Elemente können die Signale verarbeitet werden und somit die Distanz des Objektes bestimmt werden.

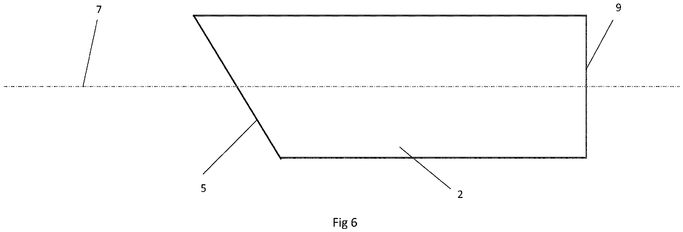

Figur 6 zeigt die Lichtleitfaser 2 mit der Auskoppelfläche 5. Die Auskoppelfläche 5 ist in einem nicht rechten Winkel zur optischen Achse 7 der Lichtleitfaser 2 angeordnet. Somit kann die Reflektionsfläche 6 auf der Auskoppelfläche 5 das empfangene Licht reflektieren und auf den Empfänger 8 leiten, ohne dass das Licht zurück in die Lichtleitfaser 2 gehen muss. Die Lichtleitfaser 2 weist weiterhin eine Einkoppelfläche 9 auf, die eine Einkoppelvorrichtung umfassen kann.

Figur 7 zeigt einen Querschnitt auf die Lichtleitfaser 2 mit der Auskoppelfläche 5. Die ringförmige Reflektionsfläche 6 ist auf der Auskoppelfläche 5 angeordnet. In der mittleren kreisförmigen Fläche kann die Sendestrahlung 13 aus der Lichtleitfaser 2 austreten und die Empfangsstrahlung 14 wird auf der Reflektionsfläche 6 zurück auf dem Empfänger 8 reflektiert.

Sende und Empfangsstrahlung sind nicht in Fig 6 und 7 eingezeichnet.

## Patentansprüche

1. Vorrichtung (1) zum Messen einer Distanz eines Objektes, an dem von der Vorrichtung (1) modulierte und ausgesendete Laserstrahlen reflektiert werden, umfassend eine Lichtleitfaser (2) in die Laserstrahlung einkoppelbar ist und eine Hauptlinse (3), durch die die Laserstrahlung entlang einer optischen Achse (4) der Hauptlinse aussendbar ist, **dadurch gekennzeichnet, dass** die Lichtleitfaser (2) eine Auskoppelfläche (5) umfasst, wobei auf der Auskoppelfläche (5) eine, insbesondere ringförmige, Reflektionsfläche (6) angeordnet ist.

2. Vorrichtung (1) nach Anspruch 1, **dadurch gekennzeichnet, dass** die Auskoppelfläche (5) einen nicht-rechten Winkel zur optischen Achse der Lichtleitfaser (7) aufweist.

3. Vorrichtung (1) nach einem der vorhergehenden Ansprüche, **dadurch gekennzeichnet, dass** Laserstrahlung von der Reflektionsfläche (6) auf einen Empfänger (8) leitbar ist, wobei der Empfänger (8) insbesondere eine Avalanche-Photodiode ist und bevorzugt in einem Entfernungsbereich von 0.01-2 mm, bevorzugt 0.05-0.3 mm oder 0.4-1mm, insbesondere 0.3-0.6mm, von der Reflektionsfläche (6) angeordnet ist.

4. Vorrichtung (1) nach einem der vorhergehenden Ansprüche, **dadurch gekennzeichnet, dass** die Lichtleitfaser (2) eine Singlemode-Lichtleitfaser und insbesondere eine polarisationserhaltende Faser ist.

5. Vorrichtung (1) nach einem der vorhergehenden Ansprüche, **dadurch gekennzeichnet, dass** die Lichtleitfaser (2) an einer Einkoppelfläche (9) eine Einkoppelvorrichtung umfasst.

6. Vorrichtung (1) nach einem der vorhergehenden Ansprüche, **dadurch gekennzeichnet, dass** die Vorrichtung (1) eine Laserquelle (10), insbesondere Laserdiode, umfasst, deren Licht in die Lichtleitfaser (2) einkoppelbar ist und durch das bevorzugte Licht mit einer Wellenlänge in einem Bereich von im Wesentlichen 490 bis 950 nm erzeugbar ist.

7. Vorrichtung (1) nach einem der vorhergehenden Ansprüche, **dadurch gekennzeichnet, dass** die Hauptlinse (3) auf der zur Lichtleitfaser (2) weisenden Seite zumindest teilweise mit Dispersionsspritzern bedeckt ist, so dass diffuses Licht reflektierbar ist.

8. Vorrichtung (1) nach einem der vorhergehenden Ansprüche, **dadurch gekennzeichnet, dass** die Hauptlinse (3) eine sphärische Linse ist, insbesondere eine achromatische Doubletlinse.

9. Vorrichtung (1) nach einem der vorhergehenden Ansprüche 1 - 7, **dadurch gekennzeichnet, dass** die Hauptlinse (3) eine asphärische Linse ist, insbesondere eine asphärische Kunststofflinse.

10. Vorrichtung (1) nach einem der vorhergehenden Ansprüche, **dadurch gekennzeichnet, dass** eine optische Achse (4) der Hauptlinse relativ zu der optischen Achse (7) der Lichtleitfaser weder koaxial noch parallel angeordnet ist, sondern insbesondere einen Winkel im Bereich von 1-359°, insbesondere 1-179°, bevorzugt +/-10° bis 30° zueinander aufweisen.

11. Vorrichtung (1) nach einem der vorhergehenden Ansprüche, **dadurch gekennzeichnet, dass** sowohl der Empfänger (8) als auch die Hauptlinse (3) in einer Fassung (11, 12) gehalten sind, die einen grösseren Wärmeausdehnungskoeffizienten aufweisen, als die die Fassungen verbindende Halterung (13) .

12. Verfahren zu Herstellung einer Lichtleitfaser zur Verwendung in einer Vorrichtung (1) nach einem der Ansprüche 1-8, **dadurch gekennzeichnet, dass**
- Insbesondere eine Auskoppelfläche (5) der Lichtleitfaser (2) in einem nicht-rechten Winkel zur optischen Achse (7) der Lichtleitfaser (2) geschliffen wird,
- die Auskoppelfläche (5) mit einer Reflektionsschicht (6) beschichtet wird,
- Entfernen der Reflektionschicht von der Auskoppelfläche (5) in einem Sendebereich um die Mitte der Lichtleitfaser (2) durch Einbringen von UV-Licht in die Lichtleitfaser (2), so dass nur der mittlere Bereich der Reflektionsschicht (6) wieder entfernt wird.

13. Verfahren zum Messen einer Distanz eines Objektes an dem von einer Vorrichtung (1) gemäss einem der Ansprüche 1 bis 9 modulierte und ausgesendete Laserstrahlen reflektiert werden, wobei
- Eine Laserquelle (10) moduliertes Laserlicht als Sendestrahlung erzeugt,
- Die Sendestrahlung in die Lichtleitfaser (2) eingekoppelt wird,
- Die Sendestrahlung durch den Sendebereich (5a) in der Auskoppelfläche (5) aus der Lichtleitfaser (2) ausgekoppelt wird,
- Die Sendestrahlung durch die Hauptlinse (3) verläuft,
- Die Sendestrahlung an einem Objekt reflektiert wird,
- Das reflektierte Laserlicht als Empfangsstrahlung durch die Hauptlinse (3) verläuft,
- Die Empfangsstrahlung an der Reflektionsschicht (6) der Auskoppelfläche (5) zumindest teilweise reflektiert und auf einen Empfänger (8) geleitet wird.

14. Vorrichtung (1) zum Messen einer Distanz eines Objektes, an dem von der Vorrichtung (1) modulierte und ausgesendete Laserstrahlen reflektiert werden, umfassend eine Lichtleitfaser (2) in die Laserstrahlung einkoppelbar ist und eine Hauptlinse (3), durch die die Laserstrahlung entlang einer optischen Achse (4) aussendbar ist, **dadurch gekennzeichnet, dass** die Laserstrahlung nach Reflektion an dem Objekt wieder durch die Hauptlinse (3) in die Lichtleitfaser (2) zurückkoppelbar ist und das reflektierte Licht nach Durchlaufen der Lichtleitfaser (2) durch einen Empfänger (8) detektierbar ist.
